# EUROPEAN PATENT SPECIFICATION

(11) **EP 2 980 029 B1**
(45) Date of publication and mention of the grant of the patent: **21.11.2018**
(21) Application number: 14773974.2
(22) Date of filing: 27.03.2014
(51) Int. Cl.: C02F 3/12, B01D 65/02, C02F 1/44, B01D 65/08, C02F 3/28, B01D 61/22, B01D 63/08

(54) **OPERATING METHOD FOR ORGANIC WASTEWATER TREATMENT DEVICE AND ORGANIC WASTEWATER TREATMENT DEVICE**
BETRIEBSVERFAHREN FÜR EINE VORRICHTUNG ZUR BEHANDLUNG ORGANISCHER ABWÄSSER UND VORRICHTUNG ZUR BEHANDLUNG ORGANISCHER ABWÄSSER
PROCÉDÉ DE FONCTIONNEMENT POUR UN DISPOSITIF DE TRAITEMENT DES EAUX USÉES ORGANIQUES, ET DISPOSITIF DE TRAITEMENT DES EAUX USÉES ORGANIQUES

(30) Priority: 27.03.2013 JP 2013066065
(43) Date of publication of application: 03.02.2016
(73) Proprietor: Kubota Corporation, Osaka-shi, Osaka 556-8601 (JP)
(72) Inventor: OKAJIMA, Yasunobu, Amagasaki-shi Hyogo 661-8567 (JP); MORITA, Yukako, Amagasaki-shi Hyogo 661-8567 (JP); OHTSUKA, Yuji, Amagasaki-shi Hyogo 661-8567 (JP)
(74) Representative: Müller-Boré & Partner Patentanwälte PartG mbB
(86) International application number: PCT/JP2014/058789
(87) International publication number: WO 2014/157488

(56) References cited:
- AU-A1- 2012 200 338
- JP-A- H11 333 490
- JP-A- 2001 170 670
- JP-A- 2001 353 497
- JP-A- 2002 126 460
- JP-A- 2002 210 484
- JP-A- 2003 275 759
- JP-A- 2004 237 202
- JP-A- 2007 152 282
- JP-A- 2007 190 488
- JP-A- 2009 279 508
- KR-B1- 101 068 205
- US-A1- 2012 187 048
- US-A1- 2012 285 874

## Description

### Technical Field

The present invention relates to a method for operating an organic wastewater treatment device and an organic wastewater treatment device.

### Background Technology

Patent Reference 1 shows a wastewater treatment device employing a membrane bioreactor process. The wastewater treatment device includes a controller which controls an amount of aeration from an aeration device such that an amount of dissolved oxygen in a nitrification tank is maintained in a predetermined range so as to efficiently perform nitrification reactions, while an amount of the aeration necessary for cleaning membrane surfaces of an immersion-type flat membrane device disposed in the nitrification tank is maintained, and that an amount of oxygen brought into a denitrification tank is suppressed so as to maintain an anoxic state of the denitrification tank in order to perform efficient denitrification reactions, by measuring the amount of dissolved oxygen in the nitrification tank and keeping it in a predetermined range.
Patent Reference 2 shows a membrane filtering device including a reaction tank having two or more divided reaction tanks which successively communicate one another. Each of the divided reaction tanks is provided with a filtration membrane unit immersed therein, and in order to stably operate the immersion-type membrane filtering device by dispersing load to filtering membranes without substantially changing a recovery rate of the device as a whole, values of a filtering flux or recovery rate of the filtering membrane units are set to become successively smaller from an intake-side divided reaction tank, into which water to be treated flows, toward a downstream-side divided tank. It is assumed that the load becomes higher in downstream-side divided tanks as the concentration progresses toward downstream.
Patent Reference 3 discloses a water treatment method in which untreated water introduced into an aeration tank is aerated with activated sludge, and the biologically treated wastewater is separated from the activated sludge using a plurality of membrane filtering units immersed in the aeration tank with a certain interval therebetween.
Patent Reference 4 discloses a system for scouring membranes in a membrane bioreactor system. The system employs scouring devices and controls by which pressurized air creates bursts of bubbles that act to scour the membranes of fouling.
Patent Reference 5 discloses a plurality of MBR tanks, each containing a membrane bioreactor (MBR) to process independently supplied water from an aerobic tank. The membrane bioreactor includes a blower for supplying cleaning air, a suction pump, and a backwash pump for supplying pressurized water.

In the above-mentioned water treatment method, an amount of filtered water sucked out from a membrane module of each membrane filtering unit is gradually increased from an untreated water intake side toward a sludge outlet side, and an amount of air bubbles generated from a diffuser of each membrane filtering unit is gradually increased from the untreated water intake side toward the sludge outlet side.

It is assumed, when a number of membrane filtering units are provided, that a shortage of the dissolved oxygen in the sludge around the membrane filtering device is more significant in the downstream side, that a suction load on the membrane filtering unit is smaller in the upstream region since the amount of sludge treatment is smaller and an amount of solid substance in the sludge is also smaller, and that the suction load on the membrane filtering unit is larger in a downstream region since the amount of sludge treatment becomes larger and an amount of solid substance adhered to the membrane module also becomes larger.

### Prior Art References

### Patent Documents

Patent Document 1: Japanese Patent Publication No. 2000-312898
Patent Document 2: Japanese Patent Publication No. 2002-126460
Patent Document 3: WO2008/139618
Patent Document 4: US 2012/187048 (Jenkins)
Patent Document 5: KR 101 068 205 (Park, 2011)

### Summary of the Invention

### Shortcomings to be Resolved by the Invention

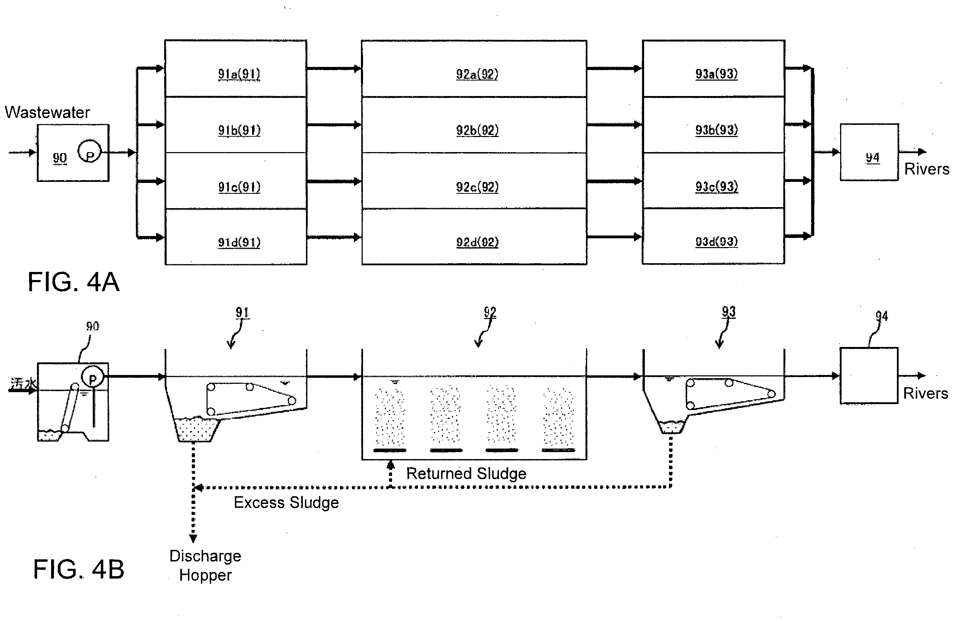

FIGS. 4A and 4B illustrate a wastewater treatment device employing a standard activated sludge process for purifying general municipal sewage such as domestic wastewater, industrial wastewater, and the like (hereinafter referred to as "wastewater").

The wastewater treatment device includes a sand basin 90, a first sedimentation basin 91, a biological treatment tank 92, a last sedimentation basin 93, and disinfection equipment 94 in this order, in which a plurality first sedimentation basins 91 (91a ∼91d), a plurality of biological treatment tanks 92 (92a ∼92d), and a plurality of last sedimentation basins 93 (93a ∼93d) are provided in parallel.

Wastewater flowing into the wastewater treatment device is, after sand and coarse materials are removed therefrom in the sand basin 90, transported to the first sedimentation basins 91 (91a ∼91d) in which suspended solid in the wastewater is separated by a sedimentation process. Thus treated wastewater is transported to the biological treatment tanks 92 (92a ∼92d) where organic components thereof are decomposed and removed by actions of microorganisms, then to the last sedimentation basins 93 (93a ∼93d) in which the active sludge settles by sedimentation, and the supernatant water from the last sedimentation basin 93 is discharged into rivers and the like after disinfected by the disinfection equipment 94.

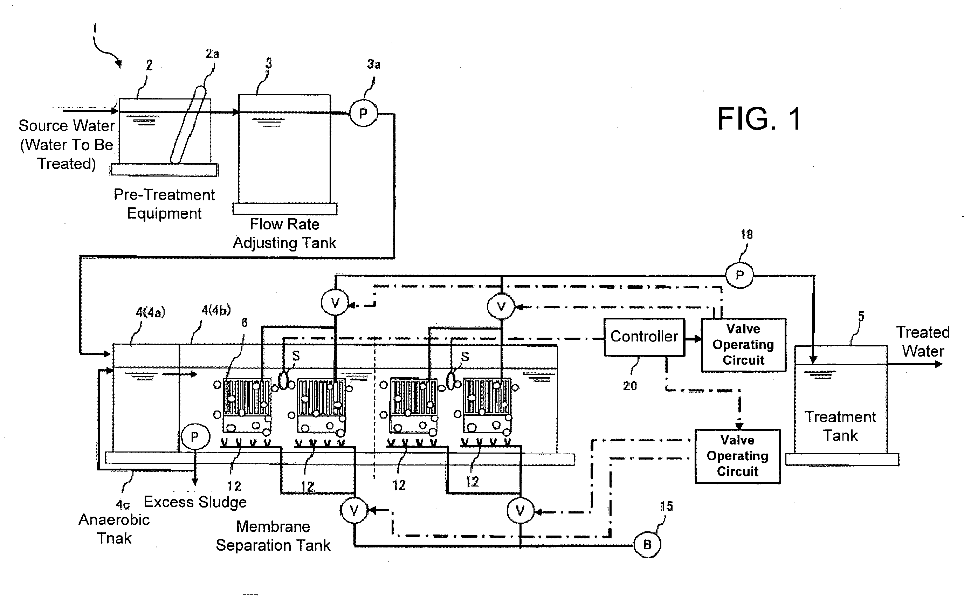

Such a wastewater treatment device employing the standard activated sludge process as described above may be reconstructed into an organic wastewater treatment device 1 as shown in FIG. 1 using a high-performance membrane bioreactor process capable of effectively removing phosphorus, nitrogen, and the like from wastewater to be treated.

The membrane bioreactor process has such advantages as reducing a tank volume or shortening reaction time in the tank since a solid-liquid separation can be performed in activated sludge having a high concentration, and also not requiring the last sedimentation basin since SS does not get mixed with membrane-filtered water and thus a site area of the treatment facility can be reduced.

In another aspect, the organic wastewater treatment device 1 employing the membrane bioreactor process may also have an anaerobic tank that performs an anaerobic treatment on the wastewater to be treated, an anoxic tank that removes nitrogen from the anaerobically-treated wastewater, an aerobic tank that performs aerobic treatment on organic matter and ammonia nitrogen, and a membrane separation tank having a membrane filtering device that filters the aerobically-treated wastewater and obtains treated water, and the present invention is applicable to either aspect of the organic wastewater treatment device.

When such a conventional wastewater treatment device is reconstructed into the organic wastewater treatment device 1 employing the membrane bioreactor process, a shape of the membrane separation tank becomes elongated due to restrictions on the existing tank shape, creating an upstream side and a downstream side along the flow of the wastewater to be treated.

As described above, Patent Document 2 discloses an operating method in which an amount of permeated water from the membrane separation units is set to be gradually reducing from the upstream side toward the downstream side of the membrane separation tank, since the concentration of the sludge increases from the upstream side toward the downstream side. Patent Document 3 discloses an operating method in which an amount of air bubbles generated from a diffuser gradually increases such that an amount of permeated water from the membrane separation units gradually increases from the upstream side toward the downstream side of the membrane separation tank, since similarly, the concentration of the sludge increases from the upstream side toward the downstream side.

However, a likelihood of fouling of the membrane separation device does not only depend on the concentration of the sludge, but the fouling is also caused by organic matter and the like remaining in the water to be treated, and thus in a plug flow system having an upstream side and a downstream side in a membrane separation tank, fouling may more likely occur on the upstream side where a large amount of organic matter is contained though the concentration of the sludge may be low, than the downstream side where the concentration of the sludge is high. In addition, since the water to be treated in the upstream side contains a large amount of organic matter which microorganisms actively decompose, the amount of oxygen necessary for biological treatment tends to become insufficient, and the microorganisms may overwork under such a condition so as to discharge metabolites that cause the fouling, or self-digest to elute fouling-causing substances.

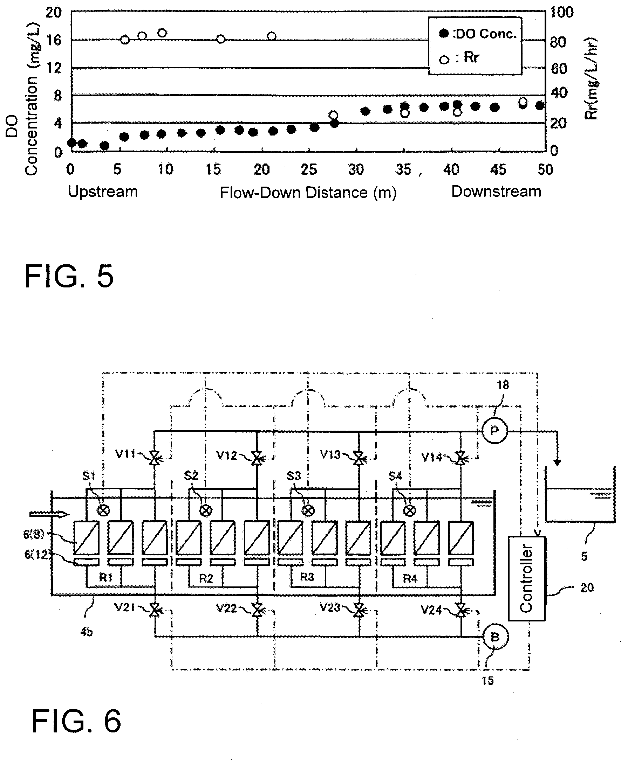

FIG. 5 shows a characteristic diagram obtained by measuring the relationship between a dissolved oxygen concentration DO and an oxygen utilization rate Rr with respect to a flow-down distance of the water to be treated, in a treatment tank in which a plurality of membrane separation devices are immersed and arranged from an upstream side toward a downstream side, under the condition that the amount of air diffusion supplied to each membrane separation device is kept constant.

In accordance with the characteristic diagram, it is shown that as a whole the dissolved oxygen concentration tends to increase from the upstream side toward the downstream side, while the oxygen utilization rate Rr tends to reduce, and thus it is surmised that the biological treatment activity is active on the upstream side where the water to be treated has a high concentration of organic matter, and that the biological treatment activity is moderate on the downstream side where the water to be treated has a low concentration of organic matter. It is also surmised that the concentration of metabolites from microorganisms which causes fouling is also increased on the upstream side where the biological treatment is actively performed.

However, a ratio of the increase in the dissolved oxygen concentration from the upstream side toward the downstream side of the treatment tank is not necessarily constant, and a range of change thereof also varies, and it is possible that the change becomes large depending on a condition and the temperature of the water to be treated.

Accordingly, there were shortcomings that it is difficult to effectively prevent fouling by such a uniform control in which the amount of the permeated water from the membrane filtering unit or the amount of aeration is gradually changed.

In view of the foregoing, an object of the present invention is to provide an organic wastewater treatment device and a method for operating an organic wastewater treatment device which can effectively prevent fouling of the entire membrane separation devices immersed in a treatment tank, by adjusting an amount of air diffusion and a flow rate of the permeated liquid in accordance with actual and real-time conditions of the water to be treated in the treatment tank.

### Means for Resolving the Shortcomings

In order to achieve the above-mentioned object, a first characteristic construction of a method for operating an organic wastewater treatment apparatus is a method for operating an organic wastewater treatment apparatus in which a plurality of membrane separation devices are immersed in a treatment tank, where the treatment tank is divided into a plurality of regions and an amount of air diffusion and/or a flow rate of permeated liquid are/is set for each of the membrane separation devices immersed in a corresponding region, based on a measured value of a sludge characteristics measuring means disposed in the corresponding region, as described in claim 1.

By measuring characteristics of the sludge for each one of the plurality of divided regions of the treatment tank by the sludge characteristics measuring means disposed therein, and adjusting the amount of air diffusion and/or the flow rate of permeated liquid for each of the membrane separation devices in the corresponding region based on the measured values, it is possible to avoid fouling of the entire membrane separation device and secure an appropriate flow rate of the permeated liquid, even if the characteristics of the sludge may vary over the regions.

A second characteristic construction of the method, in addition to the first characteristic construction described above, is that the sludge characteristics measuring means is constituted by a dissolved oxygen measuring means.

It is presumed that, in a region having a smaller amount of dissolved oxygen, oxygen is being consumed by an active biological treatment, and thus the amount of air diffusion of the membrane separation device is set larger in that region so as to clean the membrane surface and supply oxygen to the activated sludge, or the flow rate of the permeated liquid is set smaller in that region so as to reduce clogging, whereby fouling is effectively suppressed.

A third characteristic construction of the method, in addition to the first and second characteristic constructions described above, is that the amount of air diffusion and/or the flow rate of the permeated liquid of the membrane separation device in each region are/is set by changing distribution thereof among the regions while keeping a total amount of air diffusion and/or a total flow rate of permeated liquid of the entire organic wastewater treatment device constant, as described in claim 2.

By keeping the total amount of the diffusion air and/or the total flow rate of the permeated liquid of the entire organic wastewater treatment device constant, variations in energy cost and that in the flow rate of the permeated liquid are suppressed as a whole, while preventing the fouling as a whole by increasing the amount of the diffusion air or reducing the flow rate of the permeated liquid for the membrane separation device in a specific region.

A first characteristic construction of the organic wastewater treatment device in accordance with the present invention includes a treatment tank to which water to be treated is supplied, a plurality of membrane separation devices immersed in the water to be treated in the treatment tank, each of the membrane separation devices having a diffuser means for cleaning a membrane surface and a permeated liquid extracting means for extracting permeated liquid passing through the membrane surface, a plurality of sludge characteristics measuring means for measuring characteristics of the sludge, dispersedly disposed in the treatment tank, and a control means for setting an amount of air diffusion from the diffuser means and/or a flow rate of the permeated liquid from the permeated liquid extracting means provided for the membrane separation device disposed in a vicinity of the sludge characteristics measuring means based on a measured value of the sludge characteristics measuring means, as described in claim 3.

By controlling the amount of air diffusion from the diffuser means and/or the flow rate of the permeated liquid from the permeated liquid extracting means provided for the membrane separation device in accordance with the actual sludge characteristics measured by the corresponding sludge characteristics measuring means, it is possible to realize organic wastewater treatment device capable of avoiding fouling of the entire membrane separation device and securing an appropriate flow rate of the permeated liquid, even if the characteristics of the sludge may vary.

A second characteristic construction of the device, in addition to the first characteristic construction described above, is that the sludge characteristics measuring means is constituted by a dissolved oxygen measuring means.

It is presumed that, in a region having a smaller amount of dissolved oxygen, oxygen is being consumed by an active biological treatment, and thus the amount of air diffusion for the membrane separation device is set larger so as to clean the membrane surface as well as supplying oxygen to the activated sludge, or the flow rate of the permeated liquid is set smaller so as to reduce clogging in that region, whereby fouling is effectively suppressed.

A third characteristic construction of the device, in addition to the first and second characteristic constructions described above, is that the controller sets the amount of the diffusion air and/or the flow rate of the permeated liquid for each of the membrane separation devices by adjusting an opening degree of a flow rate control valve or by controlling an inverter of an electric motor for controlling the flow rate, as described in claim 4.

Such a flow rate control valve or an inverter of the electric motor is a preferable mechanism for adjusting the amount of the diffusion air and/or the flow rate of the permeated liquid for the membrane separation device, whereby the amount of the diffusion air and the flow rate of the permeated liquid are easily adjusted by a valve opening control, and an air amount from a blower fan and a sucking pressure of the pump for the permeated liquid are adjusted by controlling a frequency of the inverter output.

### Effects of the invention

As described above, in accordance with the present invention, it became possible to provide an organic wastewater treatment device and a method for operating an organic wastewater treatment device which can effectively prevent fouling of the entire membrane separation devices immersed in a treatment tank, by adjusting an amount of air diffusion and a flow rate of permeated liquid in accordance with an actual and real-time condition of the water to be treated in the treatment tank.

### Brief Description of the Drawings

FIG. 1 is a diagram explaining a wastewater treatment device.
FIG. 2 is a diagram explaining membrane separation devices.
FIG. 3 is a diagram explaining a membrane element.
FIG. 4A is a plan view of a general wastewater treatment device, and FIG. 4B is a side view of the same device.
FIG. 5 is a characteristic showing the relationship between a dissolved oxygen concentration DO and an oxygen utilization rate Rr with respect to a flow-down distance of the water to be treated, in a treatment tank having a long flow-down distance, under the condition that the amount of air diffusion supplied to each membrane separation device is kept constant.
FIG. 6 is a diagram explaining a membrane separation device in accordance with the present invention.

### Embodiments of the Invention

Hereinafter, an organic wastewater treatment device and a method for operating an organic wastewater treatment device in accordance with the present invention are explained.

FIG. 1 shows an example of an organic wastewater treatment apparatus 1 having a plurality of membrane separation devices 6 installed therein, which includes a pre-treatment equipment 2, a flow rate adjusting tank 3, a bioreactor 4 formed of an anaerobic tank 4a filled with activated sludge and a membrane separation tank 4b, the membrane separation devices 6 immersed in the membrane separation tank 4b and producing permeated water from water to be treated therein, a treated water tank 5 receiving the treated water which has been filtered by the membrane separations 6, and a controller 20 as a control means.

The pre-treatment equipment 2 is provided with a bar screen 2a and the like which removes foreign materials mixed in the untreated water, and the flow rate adjusting tank 3 temporarily stores the water to be treated from which foreign materials have been removed by the bar screen 2a and the like. The water to be treated is stably supplied to the bioreactor 4 from the flow rate adjusting tank 3 at a constant flow rate by a flow rate adjusting mechanism 3a such as a pump or valve, and the like, even if the untreated water inflow fluctuates.

In the membrane separation tank 4b which is filled with activated sludge, organic matter contained in the untreated water is decomposed by the biological treatment by the activated sludge, and permeated water which has been filtered via the membrane separation devices 6 is guided to the treated water tank 5 in which the permeated water is temporarily stored and then discharged. Part of the water to be treated in the membrane separation tank 4b is pulled by a return pump and returned to the anaerobic tank 4a via a return passage 4c. Excess of the activated sludge which has been multiplied in the membrane separation tank 4b is pulled out therefrom and discarded so as to maintain a constant concentration of the activated sludge.

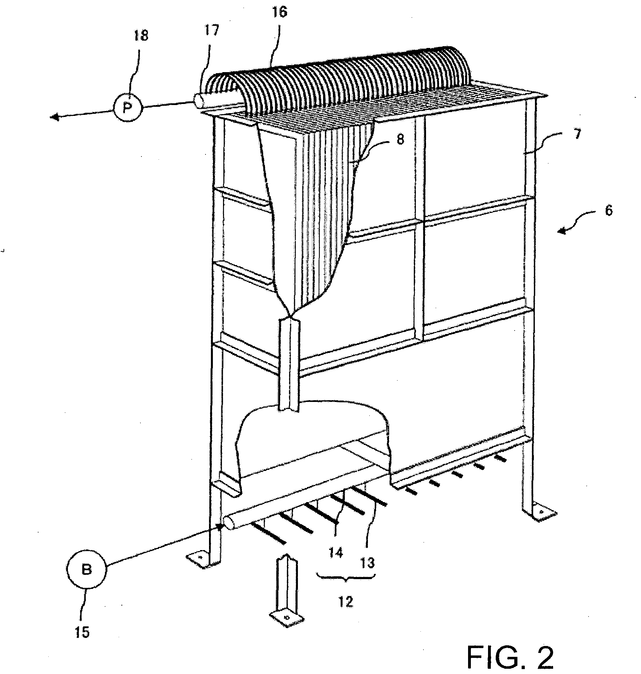

As shown in FIG. 2, each membrane separation device 6 is provided with one hundred (100) plate-shaped membrane elements 8 disposed in a membrane case 7 having upper and lower open ends such that the membrane surfaces are arranged in respective longitudinal positions and separated from each other with a fixed distance of about 6 mm to 10 mm (8 mm in this embodiment), and with a diffuser device 12 disposed under the membrane case 7.

The diffuser device 12 is provided with a diffusion pipe 13 having a plurality of diffusion holes, and is connected via a diffusion header 14 coupled to the diffusion pipe 13 to an air supply source 15 such as a blower B or a compressor provided outside of the tank.

A pump 18 as a suction mechanism external to the tank is connected to the membrane elements 8 via a liquid collection pipe 17, whereby the water to be treated in the tank is sucked and filtered through a membrane of the membrane elements 8.

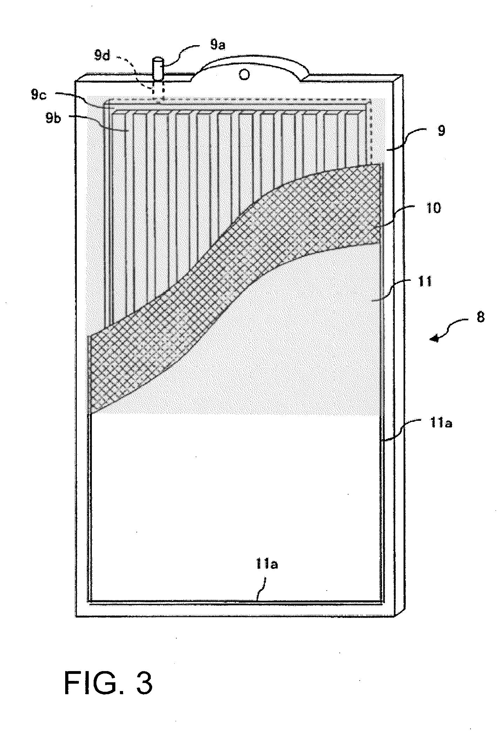

As shown in FIG. 3, in each of the membrane elements 8, a separation membrane 11 is disposed on both of the front and rear faces of a membrane support member 9 made of a resin having a height of 1000 mm and a width of 490 mm with a spacer 10 interposed therebetween. Side portions 11a at the periphery of the separation membrane 11 is adhered to the membrane support member 9 by ultrasonic or thermal welding, or using adhesive. The separation membrane 11 is a microporous membrane having an average pore diameter of about 0.2 µm, and an organic filtering membrane in which a nonwoven fabric is coated and impregnated with a porous resin. It should be noted that the membrane element 8 is not limited to this configuration, but the front and rear faces of the membrane support member 9 may be wrapped with the separation membrane 11 with the end portions thereof adhered or welded together.

A plurality of grooves 9b having a depth of about 2 mm and a width of about 2 mm are formed on a surface of the membrane support body 9 along a longitudinal direction, and a horizontal groove 9c is formed at an upper end of the grooves 9b so as to communicate with each of the grooves 9c. The front and rear surfaces of the membrane support body 9 have respective horizontal grooves 9c which communicate with each other via a communication hole 9d which in turn communicates with a nozzle 9a formed at an upper edge portion of the membrane support member 9.

Each nozzle 9a is, as shown in FIG. 2, connected to the liquid collection pipe 17 via a respective tube 16, and the pump 18 as the suction mechanism is connected to the liquid collection pipe 17, such that the permeated water sucked by the pump 18 is transported to the treated water tank 5.

By operating the diffuser device 12 in each membrane separation device 6 and the suction mechanism 18, a filtering process is performed to obtain the permeated water by passing the water to be treated through the separation membrane 11.

Referring back to FIG. 1, the membrane separation tank 4b is provided with a plurality of membrane separation devices 6 immersed therein and arranged in a flow-down direction of the water to be treated. Dissolved oxygen measuring means S, which are an example of a sludge characteristics measuring means, are arranged with an predetermined interval along the flow-down direction of the water to be treated, and a measured amount of the dissolved oxygen measured by each of the dissolved oxygen measuring means S is input to a controller 20.

The controller 20 includes a valve operating circuit for adjusting an opening degree of a valve provided to a liquid collection pipe 17 connected to the pump 18 as the suction mechanism, and another valve operating circuit for adjusting an opening degree of a valve provided to the air supply tube 14 of a respective diffusion device 12 from the blower B as the air supply source 15.

That is, the diffuser device 12 functions as the diffuser means for cleaning a membrane surface, the suction mechanism 18 function as the permeated liquid extracting means for extracting the filtered water having passed the membrane surface, and the dissolved oxygen measuring means S functions as the plurality of sludge characteristics measuring means for measuring the characteristics of the activated sludge, which are distributed in the membrane separation tank 4b.

As such, in operating the organic wastewater treatment device 1 provided with the membrane separation tank 4b having a large volume within which a large number of the membrane separation devices 6 are immersed, it is very important to effectively prevent the fouling of the entire membrane separation devices 6 immersed in the treatment tank while securing a constant flow rate of the permeated liquid.

Accordingly, the membrane separation tank 4b which is the treatment tank is divided into a plurality of regions along an arrangement direction of the membrane separation devices 6, and the controller 20 is configured to set an amount of air diffusion and a flow rate of permeated liquid for each of the membrane separation devices 6 immersed in a corresponding region, based on a measured value of the sludge characteristics measuring means disposed in each region.

FIG. 6 shows an example in which the membrane separation tank 4b is divided in four regions R1-R4 from the upstream side to the downstream side, and the regions R1∼R4 are provided with the dissolved oxygen measuring means S1∼S4 as the sludge characteristics measuring means, respectively, where the plurality of membrane separation devices 6 disposed in the regions R1∼R4 are grouped in each region. Valves V11∼V14 for adjusting the flow rate of the permeated liquid are provided to respective connection portions of the liquid collection pipes for the corresponding group of the membrane separation devices 6, and valves V21∼V24 for adjusting the amount of the diffusion air are provided to respective connection portions of the air supply tubes 14 for the corresponding diffuser devices 12.

The controller 20 measures the amount of dissolved oxygen as the sludge characteristics, via the dissolved oxygen measuring means S1∼S4 provided for the plurality of divided regions R1∼R4 in the treatment tank, and adjusts the suitable amount of the diffusion air and the suitable flow rate of the permeated liquid for the membrane separation devices 6 in the corresponding region based on the measured value, thereby securing the suitable flow rate of the permeated liquid while avoiding the fouling of the entire membrane separation devices, even if the characteristics of the sludge vary in respective regions R1∼R4.

More specifically, an appropriate total amount of air diffusion necessary for the membrane separation tank 4b is predetermined with respect to an expected BOD/SS load of the untreated water, and the controller 20 sets the opening degree of the respective valves V21∼V24 such that the total amount of air diffusion is equally distributed among the regions and supplied through each of the membrane separation devices 6 disposed in the corresponding regions.

Similarly, the controller 20 sets the opening degree of the respective valves V11∼V14 for adjusting flow rate of the permeated liquid such that a predetermined total flow rate of the permeated liquid is equally divided among the regions, and such a divided amount of the flow rate is obtained from each of the membrane separation devices 6 disposed in the respective regions.

After that, the controller 20 inputs the measured values of the dissolved oxygen measuring means S1∼S4 at a predetermined time interval (for example, every 3 hours), and adjusts the opening degree of the respective valves V21∼V24 and V11∼V14 based on the measured values such that a greater amount of air diffusion and a smaller flow rate of permeated liquid are set for the membrane separation devices 6 disposed in the regions having a smaller amount of the dissolved oxygen.

For example, the opening degree of the valves V21∼V24 may be adjusted such that the ratio of the measured values of the dissolved oxygen amount in each region and the ratio of the air diffusion amount in each region are substantially inversely proportional to each other, while the opening degree of the valves V11∼V14 may be adjusted such that the ratio of the measured values of the dissolved oxygen amount in each region and the ratio of the flow rate in each region are substantially proportional to each other.

For example, the opening degree of the valves V21∼V24 may be adjusted such that an amount of air diffusion in each region is obtained by a deviation from an average of the measured values of the dissolved oxygen amount in each region multiplied by a predetermined air diffusion correction coefficient, while the opening degree of the valves V11∼V14 may be adjusted such that a flow rate of permeated liquid in each region is obtained by the deviation from the average multiplied by a predetermined permeated liquid flow rate correction coefficient.

It should be noted that the air diffusion correction coefficient has a negative value, such that a negative deviation increases the amount of air diffusion, and a positive deviation decreases the amount of air diffusion. The permeated liquid flow rate correction coefficient has a positive value, such that a negative deviation decreases the flow rate of the permeated liquid, and a positive deviation increases the flow rate of the permeated liquid.

For Example, the opening degree of the respective valves V21-V24 and V11∼V14 may be adjusted using values in a correction table which are predetermined based on the deviation from the average of the measured values of the amount of dissolved oxygen in each region.

In either case, the above-mentioned control is performed under the condition in which the total amount of air diffusion and the total flow rate of the permeated liquid are kept constant. In addition, the time interval for inputting the measured values of the dissolved oxygen measuring means S1∼S4 is not limited to a specific value, but can be set as desired.

In the embodiments described above, the amount of air diffusion and/or the flow rate of permeated liquid are(is) set for a respective membrane separation devices disposed in the corresponding regions by changing distribution among them under the condition in which the total amount of air diffusion and the total flow rate of permeated liquid are kept constant. However, in accordance with another embodiment, the total amount of air diffusion and the total flow rate of permeated liquid may be variable to have appropriate values of the total amount of air diffusion and the total flow rate of permeated liquid based on an average of the measured values of the dissolved oxygen measuring means S1∼S4, and then the distribution of the amount of the air diffusion and the flow rate of the permeated liquid can be adjusted with respect to the variable total amount of air diffusion and the variable total flow rate of the permeated liquid. In this case, the distribution can be adjusted in a similar manner as the above-discussed embodiment.

By making the total amount of air diffusion and the total flow rate of permeated liquid variable, it is possible to appropriately respond to changes in the sludge characteristics due to ever-changing characteristics of the untreated water flowing in.

Accordingly, the present invention presumes that, in a region having a smaller amount of dissolved oxygen, oxygen is being consumed by an active biological treatment which also produces a large amount of fouling-causing material such as metabolites of microorganisms, and thus in order to prevent the fouling of the membrane separation device in that region, the amount of air diffusion of the membrane separation device is increased in that region so as to clean the membrane surface, as well as the flow rate of permeated liquid in the membrane separation device in that region is decreased so as to reduce adhesion of the fouling material to the membrane surface, such that the fouling of all of the membrane separation devices in the tank is effectively prevented and the system can be stably operated for a long term.

The amount of air diffusion and the flow rate of permeated liquid in each region are open-loop controlled by the controller 20 in order to prevent the fouling, but are not feedback-controlled in order to realize a target value of the sludge characteristics which is the amount of dissolved oxygen in the present case. However, when the total amount of air diffusion and the total flow rate of permeated liquid are set variable so as to realize a suitable total amount of air diffusion and a suitable total flow rate of permeated liquid based on the average of the measured values of the dissolved oxygen measuring means S1∼S4, it is preferable to feedback-control the total amount of air diffusion and the total flow rate of permeated liquid. For example, a PID control can be suitably used.

Although in the above-mentioned embodiment the controller 20 controls both of the amount of air diffusion and the flow rate of permeated liquid based on the measured values of the amount of the dissolved oxygen in each region, it is possible to control either one of them in another embodiment.

Accordingly, the controller 20 may set a larger amount for the air diffusion from the diffuser means provided to the membrane separation device, or a smaller flow rate for the permeated liquid for the membrane separation device disposed in the vicinity of the dissolved oxygen measuring means, when the amount of dissolved oxygen measured by the dissolved oxygen measuring means becomes smaller than a predetermined value.

In such an embodiment, the one which is not being controlled can stay in the initial condition thereof. Alternately, the one which is not being controlled can also be controlled based on another index, independently of the above-described control

As examples, indexes for the sludge characteristics includes, other than the amount of dissolved oxygen, an oxygen utilization rate, ORP, COD, and the like. The indexes can be automatically measured using sensors in the above embodiments, and can also be manually measured by an observer and the measured values may be manually input to the controller 20. Not only the controller 20 automatically controls each of the valves, but also an observer can manually operate a control panel of the controller 20. The controller 20 is not limited to a specific configuration, but can be realized by an electronic control using a computer, a remote control using sequencer, and the like, in accordance with various embodiments.

In the embodiments above, the amount of air diffusion and the flow rate of permeated liquid for the membrane separation device are adjusted by respective valves for adjusting the flow rate which are disposed in respective regions. However, as examples, the amount of air diffusion and the flow rate of permeated liquid can also be adjusted by providing each region with a blower fan B and a pump P and adjusting a rotation speed of the motors mounted in the blower fan B and the pump P via inverter circuits using the controller 20.

In accordance with the above embodiments, the present invention is described in the case where an elongated treatment tank is divided into a plurality of regions along the downstream direction when an existing biological treatment tank in an existing wastewater treatment device is reconstructed into a membrane separation tank, for example. However, the present invention is not limited to be applied to such an elongated treatment tank, but is also applicable to a wide-width treatment tank. In such a case, the treatment tank is divided into a matrix of regions in a plan view, and the amount of air diffusion and/or the flow rate of permeated liquid can be set for the membrane separation devices immersed in respective regions in accordance with the measured values of the sludge characteristics measuring means disposed in the corresponding regions.

Each embodiment mentioned above is an example of the present invention, and the present invention is not limited by the description above. A design of the specific structure of each part can be changed so long as the function and effect of the present invention is achieved.

### Description of the reference numerals

1: membrane separation device
4a: anaerobic tank
4b: membrane separation tank
6: membrane separation device
12: diffuser device
15: air supply source (blower)
18: suction mechanism (pump)
20: controller

## Claims

1. A method for operating an organic wastewater treatment apparatus in which a plurality of membrane separation devices (6) are immersed in a treatment tank (4b), the method comprising:
dividing the treatment tank (4b) into a plurality of regions (R1-R4), each one of the regions having a sludge characteristics measuring means (S1-S4) disposed therein; and
setting, by control means (20), an amount of air diffusion and/or a flow rate of permeated liquid for each of the membrane separation devices (6) which is immersed in a corresponding region (R1-R4) via valves (V11-V14) for adjusting the flow rate of permeated liquid and valves (V21-V24) for adjusting the amount of air diffusion, based on a measured value of the sludge characteristics measuring means (S1-S4) disposed in the corresponding region (R1-R4), wherein the sludge characteristics measuring means (S1-S4) is constituted by a dissolved oxygen measuring means, the setting comprising:
when setting the amount of air diffusion, distributing the total amount of air diffusion equally among the regions (R1-R4) based on a predetermined total amount of air diffusion with respect to an expected BOD/SS load of water to be treated by setting an opening degree of the respective valves (V21-V24);
when setting the flow rate, dividing the flow rate of permeated liquid equally among the regions (R1-R4) based on a predetermined total flow rate for the treatment tank (4b) by setting an opening degree of the respective valves (V11-V14);
determining, at predetermined time intervals, average measured values of the dissolved oxygen amount for each region (R1-R4) and adjusting the amount of air diffusion and/or the flow rate for each region (R1-R4) by:
when there is a negative deviation from the average measured values of the dissolved oxygen amount, increasing the amount of air diffusion and/or decreasing the flow rate by adjusting the opening degree of the respective valves (V11-V14; V21-V24);
when there is a positive deviation from the average measured values of the dissolved oxygen amount, decreasing the amount of air diffusion and/or increasing the flow rate by adjusting the opening degree of the respective valves (V11-V14; V21-V24).

2. The method for operating the organic wastewater treatment apparatus in accordance with claim 1, wherein the amount of air diffusion and/or the flow rate of the permeated liquid of the membrane separation device (6) in each region (R1-R4) are/is set by changing distribution thereof among the regions (R1-R4) while keeping a total amount of the air diffusion and/or a total flow rate of the permeated liquid of the entire organic wastewater treatment device constant.

3. An organic wastewater treatment apparatus, comprising:
a treatment tank (4b), divided into a plurality of regions (R1-R4), to which water to be treated is supplied;
a plurality of membrane separation devices (6) immersed in the water to be treated in the treatment tank (4b), each of the membrane separation devices (6) being immersed in a corresponding region (R1-R4), each of the membrane separation devices (6) having a diffuser means (12) for cleaning a membrane surface and a permeated liquid extracting means (17) for extracting permeated liquid passing through a membrane surface;
a plurality of sludge characteristics measuring means (S1-S4) for measuring characteristics of the sludge, each disposed in one of the corresponding regions (R1-R4); and
a control means (20) configured to:
set an amount of air diffusion from the diffuser means (12) and/or a flow rate of permeated liquid from the permeated liquid extracting means (17) provided for the membrane separation device (6) disposed in a vicinity of the sludge characteristics measuring means (S1-S4) via valves (V11-V14) for adjusting the flow rate of permeated liquid and valves (V21-V24) for adjusting the amount of air diffusion, based on a measured value of the sludge characteristics measuring means (S1-S4), wherein the sludge characteristics measuring means is constituted by a dissolved oxygen measuring means, the control means (20) being configured to set the amount of air diffusion and/or the flow rate by:
when setting the amount of air diffusion, distributing the amount of air diffusion equally among the regions (R1-R4) based on a predetermined total amount of air diffusion with respect to an expected BOD/SS load of the water to be treated by setting an opening degree of the respective valves (V21-V24);
when setting the flow rate, dividing the flow rate of permeated liquid equally among the regions (R1-R4) based on a predetermined total flow rate for the treatment tank (4b) by setting an opening degree of the respective valves (V11-V24);
determining, at predetermined time intervals, average measured values of the dissolved oxygen amount for each region (R1-R4) and adjusting the amount of air diffusion and/or the flow rate for each region (R1-R4) by:
when there is a negative deviation from the average measured values of the dissolved oxygen amount, increasing the amount of air diffusion and/or decreasing the flow rate by adjusting the opening degree of the respective valves (V11-V14; V21-V24);
when there is a positive deviation from the average measured values of the dissolved oxygen amount, decreasing the amount of air diffusion and/or increasing the flow rate by adjusting the opening degree of the respective valves (V11-V14; V21-V24).

4. The organic wastewater treatment apparatus in accordance with claim 3, wherein the controller (20) sets the amount of the diffusion air and/or the flow rate of the permeated liquid for each of the membrane separation devices (6) by adjusting an opening of a flow rate control valve or by controlling an inverter of an electric motor for controlling the flow rate.

## Patentansprüche

1. Ein Verfahren zum Betreiben einer Vorrichtung zur Behandlung von organischen Abwässern, bei der eine Vielzahl von Membrantrennvorrichtungen (6) in einen Behandlungstank (4b) eingetaucht werden, wobei das Verfahren Folgendes umfasst:
Unterteilen des Behandlungstanks (4b) in eine Vielzahl von Bereichen (R1-R4), wobei jeder der Bereiche eine darin angeordnete Schlammeigenschaften-Messeinrichtung (S1-S4) aufweist; und
Einstellen, durch Steuermittel (20), einer Luftdiffusionsmenge und/oder einer Durchflussmenge an durchgedrungener Flüssigkeit für jede der Membrantrennvorrichtungen (6), die in einen entsprechenden Bereich (R1-R4) eingetaucht wird, über Ventile (V11-V14) zum Einstellen der Durchflussmenge an durchgedrungener Flüssigkeit und Ventile (V21-V24) zum Einstellen der Luftdiffusionsmenge, basierend auf einem Messwert der in dem entsprechenden Bereich (R1-R4) angeordneten Schlammeigenschaften-Messmittel (S1-S4),
wobei die Schlammeigenschaften-Messeinrichtung (S1-S4) durch eine Messvorrichtung für gelösten Sauerstoff gebildet wird, wobei das Einstellen Folgendes umfasst:
bei der Einstellung der Luftdiffusionsmenge, gleichmäßiges Verteilen der Gesamtmenge der Luftdiffusion auf die Bereiche (R1-R4), basierend auf einer vorbestimmten Gesamtmenge der Luftdiffusion in Bezug auf eine erwartete BOD/SS-Belastung des zu behandelnden Wassers durch Einstellen eines Öffnungsgrades der jeweiligen Ventile (V21-V24);
bei der Einstellung der Durchflussmenge, gleichmäßiges Verteilen der Durchflussmenge an durchgedrungener Flüssigkeit auf die Bereiche (R1-R4), basierend auf einer vorgegebenen Gesamtdurchflussmenge für den Behandlungstank (4b) durch Einstellen eines Öffnungsgrades der jeweiligen Ventile (V11-V14);
Bestimmen, in vorbestimmten Zeitintervallen, von gemittelten Messwerten der gelösten Sauerstoffmenge für jeden Bereich (R1-R4) und Einstellen der Luftdiffusionsmenge und/oder der Durchflussmenge für jeden Bereich (R1-R4) durch:
bei negativer Abweichung von den gemittelten Messwerten der gelösten Sauerstoffmenge, Erhöhen der Luftdiffusionsmenge und/oder Verringern der Durchflussmenge durch Einstellen des Öffnungsgrades der jeweiligen Ventile (V11-V14; V21-V24);
bei positiver Abweichung von den gemittelten Messwerten der gelösten Sauerstoffmenge, Verringern der Luftdiffusionsmenge und/oder Erhöhen der Durchflussmenge durch Einstellung des Öffnungsgrades der jeweiligen Ventile (V11-V14; V21-V24).

2. Das Verfahren zum Betreiben der Vorrichtung zur Behandlung von organischen Abwässern, nach Anspruch 1, wobei die Luftdiffusionsmenge und/oder die Durchflussmenge an durchgedrungener Flüssigkeit der Membrantrennvorrichtung (6) in jedem Bereich (R1-R4) eingestellt wird durch das Ändern von deren Verteilung auf die Regionen (R1-R4) unter Konstanthaltung einer Gesamtmenge der Luftdiffusion und/oder einer Gesamtdurchflussmenge an durchgedrungener Flüssigkeit der gesamten Vorrichtung zur Behandlung von organischen Abwässern.

3. Eine Vorrichtung zur Behandlung von organischen Abwässern, die Folgendes umfasst:
einen Behandlungstank (4b), der in mehrere Bereiche (R1-R4) unterteilt ist, denen zu behandelndes Wasser zugeführt wird;
eine Vielzahl von Membrantrennvorrichtungen (6), die in das zu behandelnde Wasser im Behandlungstank (4b) eingetaucht sind, wobei jede der Membrantrennvorrichtungen (6) in einen entsprechenden Bereich (R1-R4) eingetaucht ist, wobei jede der Membrantrennvorrichtungen (6) eine Diffusoreinrichtung (12) zum Reinigen einer Membranoberfläche und eine Permeatflüssigkeitsextraktionseinrichtung (17) zum Extrahieren von durchgedrungener Flüssigkeit aufweist, die durch eine Membranoberfläche läuft;
eine Vielzahl von Schlammeigenschaften-Messeinrichtungen (S1-S4) zum Messen von Eigenschaften des Schlamms, die jeweils in einem der entsprechenden Bereiche (R1-R4) angeordnet sind; und
eine Steuereinrichtung (20), die konfiguriert ist, um Folgendes zu bewerkstelligen:
Einstellen einer Luftdiffusionsmenge aus den Diffusormitteln (12) und/oder eine Durchflussmenge an durchgedrungener Flüssigkeit aus der PermeatflüssigkeitsExtraktionseinrichtung, die für die Membrantrenneinrichtung (6) bereitgestellt ist, die in einer Nähe der Schlammeigenschaften-Messeinrichtung (S1-S4) angeordnet ist, über Ventile (V11-V14) zum Einstellen der Durchflussmenge an durchgedrungener Flüssigkeit und Ventile (V21-V24) zum Einstellen der Luftdiffusionsmenge, basierend auf einem Messwert der Schlammeigenschaften-Messmittel (S1-S4),
wobei die Schlammeigenschaften-Messeinrichtung durch eine Messeinrichtung für gelösten Sauerstoff gebildet wird,
wobei die Steuereinrichtung (20) so konfiguriert ist, dass sie die Menge der Luftdiffusion und/oder die Durchflussmenge einstellt, indem sie Folgendes bewerkstelligt:
bei der Einstellung der Luftdiffusionsmenge, gleichmäßiges Verteilen der Gesamtmenge der Luftdiffusion auf die Bereiche (R1-R4), basierend auf einer vorbestimmten Gesamtmenge der Luftdiffusion in Bezug auf eine erwartete BOD/SS-Belastung des zu behandelnden Wassers durch Einstellen eines Öffnungsgrades der jeweiligen Ventile (V21-V24);
bei der Einstellung der Durchflussmenge, gleichmäßiges Verteilen der Durchflussmenge an durchgedrungener Flüssigkeit auf die Bereiche (R1-R4), basierend auf einer vorgegebenen Gesamtdurchflussmenge für den Behandlungstank (4b) durch Einstellen eines Öffnungsgrades der jeweiligen Ventile (V11-V14);
Bestimmen, in vorbestimmten Zeitintervallen, von gemittelten Messwerten der gelösten Sauerstoffmenge für jeden Bereich (R1-R4) und Einstellen der Luftdiffusionsmenge und/oder der Durchflussmenge für jeden Bereich (R1-R4) durch:
bei negativer Abweichung von den gemittelten Messwerten der gelösten Sauerstoffmenge, Erhöhen der Luftdiffusionsmenge und/oder Verringern der Durchflussmenge durch Einstellen des Öffnungsgrades der jeweiligen Ventile (V11-V14; V21-V24);
bei positiver Abweichung von den gemittelten Messwerten der gelösten Sauerstoffmenge, Verringern der Luftdiffusionsmenge und/oder Erhöhen der Durchflussmenge durch Einstellung des Öffnungsgrades der jeweiligen Ventile (V11-V14; V21-V24).

4. Die Vorrichtung zur Behandlung von organischen Abwässern nach Anspruch 3, wobei die Steuerung (20) die Menge der Diffusionsluft und/oder die Durchflussmenge der durchgedrungenen Flüssigkeit für jede der Membrantrenneinrichtungen (6) durch Einstellen einer Öffnung eines Durchflussregelventils oder durch Steuern eines Wechselrichters eines Elektromotors zur Steuerung der Durchflussmenge einstellt.

## Revendications

1. Un procédé pour faire fonctionner un appareil de traitement des eaux usées organiques dans lequel une pluralité de dispositifs de séparation à membrane (6) sont immergés dans un réservoir de traitement (4b), le procédé comprenant le fait de :
diviser le réservoir de traitement (4b) en une pluralité de régions (R1-R4), chacune des régions présentant des moyens de mesure des caractéristiques des boues (S1-S4) disposés à l'intérieur ; et
régler, par un moyen de commande (20), une quantité de diffusion d'air et/ou d'un débit de perméat liquide pour chacun des dispositifs de séparation à membrane (6) qui est immergé dans une zone correspondante (R1-R4) par l'intermédiaire de soupapes (V11-V14) pour ajuster le débit de perméat liquide et de soupapes (V21-V24) pour ajuster la quantité de diffusion d'air, sur la base d'une valeur mesurée des moyens de mesure des caractéristiques des boues (S1-S4) disposés dans la zone correspondante (R1-R4),
sachant que les moyens de mesure des caractéristiques des boues (S1-S4) sont constitués par des moyens de mesure de l'oxygène dissous, le fait de régler comprenant:
lors du réglage de la quantité de diffusion d'air, le fait de répartir la quantité totale de diffusion d'air de manière égale entre les régions (R1-R4) sur la base d'une quantité totale prédéterminée de diffusion d'air par rapport à une charge BOD/SS prévue d'eau à traiter en réglant un degré d'ouverture des soupapes respectives (V21-V24) ;
lors du réglage du débit, le fait de diviser le débit de perméat liquide de manière égale entre les régions (R1-R4) sur la base d'un débit total prédéterminé pour le réservoir de traitement (4b) en réglant un degré d'ouverture des soupapes respectives (V11- V14) ;
le fait de déterminer, à des intervalles de temps prédéterminés, des valeurs moyennes mesurées de la quantité d'oxygène dissous pour chaque région (R1-R4) et d'ajuster la quantité de diffusion d'air et/ou le débit pour chaque région (R1-R4) :
lorsqu'il y a un écart négatif par rapport aux valeurs moyennes mesurées de la quantité d'oxygène dissous, en augmentant la quantité de diffusion d'air et/ou en diminuant le débit par l'ajustage du degré d'ouverture des soupapes respectives (V11-V14 ; V21-V24) ;
lorsqu'il y a un écart positif par rapport aux valeurs moyennes mesurées de la quantité d'oxygène dissous, en diminuant la quantité de diffusion d'air et/ou en augmentant le débit par l'ajustage du degré d'ouverture des soupapes respectives (V11-V14 ; V21-V24).

2. Le procédé pour faire fonctionner l'appareil de traitement des eaux usées organiques conformément à la revendication 1, sachant que la quantité de diffusion d'air et/ou le débit de perméat liquide du dispositif de séparation à membrane (6) dans chaque région (R1-R4) sont réglés par le fait de
modifier leur répartition parmi les régions (R1-R4) tout en maintenant constante une quantité totale de diffusion d'air et/ou un débit total de perméat liquide de l'ensemble du dispositif de traitement des eaux usées organiques.

3. Un appareil de traitement des eaux usées organiques, comprenant :
un réservoir de traitement (4b), divisé en une pluralité de régions (R1-R4), dans lesquelles l'eau à traiter est amenée ;
une pluralité de dispositifs de séparation à membrane (6) immergés dans l'eau à traiter dans le réservoir de traitement (4b), chacun des dispositifs de séparation à membrane (6) étant immergé dans une région correspondante (R1-R4), chacun des dispositifs de séparation à membrane (6) présentant un moyen de diffusion (12) pour nettoyer une surface de membrane et un moyen d'extraction de perméat liquide (17) pour extraire le perméat liquide passant à travers une surface de membrane ;
une pluralité de moyens de mesure des caractéristiques des boues (S1-S4) pour mesurer les caractéristiques des boues, chacun étant disposé dans l'une des régions correspondantes (R1-R4) ; et
un moyen de commande (20) configuré pour :
régler une quantité de diffusion d'air à partir du moyen de diffusion (12) et/ou un débit de perméat liquide à partir du moyen d'extraction de perméat liquide (17) fourni pour le dispositif de séparation à membrane (6) disposé à proximité du moyen de mesure des caractéristiques des boues (S1-S4) via des soupapes (V11-V14) pour régler le débit de perméat liquide et des soupapes (V21-V24) pour régler la quantité de diffusion d'air, sur la base d'une valeur mesurée du moyen de mesure des caractéristiques des boues (S1-S4),
sachant que le moyen de mesure des caractéristiques des boues est constitué par un moyen de mesure de l'oxygène dissous,
le moyen de commande (20) étant configuré pour régler la quantité de diffusion d'air et/ou le débit par :
lors du réglage de la quantité de diffusion d'air, le fait de répartir la quantité totale de diffusion d'air de manière égale entre les régions (R1-R4) sur la base d'une quantité totale prédéterminée de diffusion d'air par rapport à une charge BOD/SS prévue d'eau à traiter en réglant un degré d'ouverture des soupapes respectives (V21-V24) ;
lors du réglage du débit, le fait de diviser le débit de perméat liquide de manière égale entre les régions (R1-R4) sur la base d'un débit total prédéterminé pour le réservoir de traitement (4b) en réglant un degré d'ouverture des soupapes respectives (V11- V14) ;
le fait de déterminer, à des intervalles de temps prédéterminés, des valeurs moyennes mesurées de la quantité d'oxygène dissous pour chaque région (R1-R4) et d'ajuster la quantité de diffusion d'air et/ou le débit pour chaque région (R1-R4) :
lorsqu'il y a un écart négatif par rapport aux valeurs moyennes mesurées de la quantité d'oxygène dissous, en augmentant la quantité de diffusion d'air et/ou en diminuant le débit par l'ajustage du degré d'ouverture des soupapes respectives (V11-V14 ; V21-V24) ;
lorsqu'il y a un écart positif par rapport aux valeurs moyennes mesurées de la quantité d'oxygène dissous, en diminuant la quantité de diffusion d'air et/ou en augmentant le débit par l'ajustage du degré d'ouverture des soupapes respectives (V11-V14 ; V21-V24).

4. L'appareil de traitement des eaux usées organiques d'après la revendication 3, sachant que la commande (20) règle la quantité d'air de diffusion et/ou le débit du perméat liquide pour chacun des dispositifs de séparation à membrane (6) en ajustant une ouverture d'une soupape de contrôle de débit ou en commandant un onduleur d'un moteur électrique pour contrôler le débit.
